# EUROPÄISCHE PATENTSCHRIFT

(11) **EP 0 995 891 B1**
(45) Veröffentlichungstag und Bekanntmachung des Hinweises auf die Patenterteilung: **15.06.2005**
(21) Anmeldenummer: 99810878.1
(22) Anmeldetag: 29.09.1999
(51) Int. Cl.: F02C 7/16, F02C 7/18, F02C 6/00, F01D 17/04

(54) **Turbomaschine und Verfahren zum Betrieb derselben**
Turbomachine and method for its operation
Turbomachine et sa méthode d'opération

(30) Priorität: 20.10.1998 EP 98811052
(43) Veröffentlichungstag der Anmeldung: 26.04.2000
(73) Patentinhaber: ALSTOM Technology Ltd, 5400 Baden (CH)
(72) Erfinder: Braun, Jost, Dr., 79761 Waldshut-Tiengen (DE); Rebhan, Dieter, 79774 Albbruck (DE); Rofka, Stefan, 5415 Nussbaumen (CH); Zierer, Thomas, Dr., 5408 Ennetbaden (CH)

(56) Entgegenhaltungen:
- EP-A- 0 379 880
- EP-A- 0 543 627
- EP-A- 0 684 369
- GB-A- 2 236 145
- US-A- 5 829 245
- PATENT ABSTRACTS OF JAPAN vol. 1999, no. 12, 29. Oktober 1999 (1999-10-29) & JP 11 182263 A (HITACHI LTD), 6. Juli 1999 (1999-07-06)
- PATENT ABSTRACTS OF JAPAN vol. 016, no. 434 (M-1308), 10. September 1992 (1992-09-10) & JP 04 148035 A (TOSHIBA CORP), 21. Mai 1992 (1992-05-21)
- PATENT ABSTRACTS OF JAPAN vol. 1997, no. 08, 29. August 1997 (1997-08-29) & JP 09 112215 A (TOSHIBA CORP), 28. April 1997 (1997-04-28)

## Beschreibung

### Technisches Gebiet

Die Erfindung betrifft eine Turbomaschine gemäss dem Oberbegriff des Anspruchs 1. Sie betrifft weiterhin eine bevorzugte Verwendung der erfindungsgemässen Turbomaschine und ein Verfahren zum Betrieb derselben.

### Stand der Technik

In den heutigen liberalisierten Strommärkten ist es lukrativ, Reserven zur Deckung von Lastspitzen oder zur Überbrückung eines Resoucenausfalls zur Verfügung zu stellen. Unter Umständen lässt sich hier mit nur wenigen Prozent der täglich in Grund- und Mittellast produzierten elektrischen Energie leicht mehr als die Hälfte der Einnahmen generieren.

Die Bereitstellung der Spitzenlastresourcen kann auf unterschiedliche Arten erfolgen. Ein naheliegender Weg, die Bereitstellung über Spitzenlast-Wasserkraftwerke, ist aus vielerlei Gründen nur in den seltensten Fällen möglich. Techniken wie Luftspeicherturbinen muss bis heute und nach allem Ermessen in eine noch ferne Zukunft aus vielerlei Gründen ein Exotenstatus zuerkannt werden.

Daher werden Spitzenlastresoucen auch in thermischen Anlagen bereitgestellt. Dies erfolgt beispielsweise dadurch, dass Kraftwerke im Grundlastbetrieb ein wenig unterhalb Vollast betrieben werden, beispielsweise auf 90 bis 95% ihrer Nominalleistung; die Reserveleitung kann dann je nach Anlagenbauart unterschiedlich schnell mobilisiert werden. Teilweise werden auch schnell anzufahrende Gasturbinenkraftwerke bereitgestellt. Beide Methoden führen jedoch dazu, teuer installierte Kapazitäten nur unvollständig auszunutzen.

Bei Gasturbinen - sowohl im Solobetrieb als auch als Bestandteil von Kombi-Anlagen - sind weiterhin Möglichkeiten bekannt, diese Maschinen zeitweise durch eine stärkere Feuerung unter einer Art Überlast zu betreiben. Hierzu kann einerseits die Heissgastemperatur am Turbineneintritt kurzzeitig um einige Grad angehoben werden. Dieses Verfahren ist ohne zusätzlichen apparativen Aufwand durchführbar, aber insofern unwirtschaftlich, als eine nachhaltige Verkürzung der Bauteillebensdauer im Heissgaspfad resultiert.

Eine weitere Möglichkeit stellt die Einbringung von Wasser oder Dampf in das Heissgas, bevorzugt in der Brennkammer, dar. Die hierdurch erzielte Verringerung der Heissgastemperatur erlaubt es dabei, mehr Brennstoff zuzuführen, um die Heissgastemperatur wieder auf den Auslegungspunkt zu steigern. Zwar bedeutet dieses Verfahren geringe Einbussen an Wirtschaftlichkeit aufgrund der mit dem Abgas abgeführten latenten Wärme des Wasserdampfes; in Anbetracht hoher am Markt zu erzielender Preise für Spitzenlaststrom kann eine solche temporäre Wirkungsgradeinbusse aber hingenommen werden.

Die US 4 928 478 beschreibt einen Prozess, bei dem in einem Abhitzekessel Prozessdampf erzeugt wird. Ein Teil des Dampfes, der beispielsweise nicht als Prozessdampf benötigt wird, kann der Brennkammer einer Gasturbine zugeführt werden. Selbstverständlich fallen Wirkungsgradeinbussen geringer aus, wenn zur Leitungserhöhung Dampf aus einem Abhitzekessel benutzt wird. Andererseits ist auch festzustellen, dass der dort erzeugte Dampf in der Dampfturbine eines Kombikraftwerkes wesentlich effizienter eingesetzt werden kann. Zur spontanen Bereitstellung einer zusätzlichen Leistung sind solche Verfahren dennoch sehr gut geeignet.

Grenzen findet die Einbringung von Wasser oder Dampf in das Heissgas einer Dampfturbine einerseits, wenn das Druckverhältnis aufgrund des zusätzlichen Massenstroms über die Masse ansteigt. Weiterhin resultiert aus der Einbringung von Wasser oder Dampf in die Brennkammer - häufig auch unmittelbar im Bereich der Flamme - in einer Störung der Verbrennung. Gerade in Verbindung mit mager betriebenen Vormischbrennern, wie sie beispielsweise in der EP 0 321 809 beschrieben sind, kann dies zu unerwünschten negativen Auswirkungen auf die Flammenstabilität führen.

Die EP 0 795 685 offenbart eine Möglichkeit, dem Arbeitsfluid einer Gasturbine Dampf zuzuführen, ohne negative Auswirkungen auf die Verbrennung zu induzieren. Dampf, der in einem Abhitzekessel erzeugt wird, wird hierbei zur Kühlung der thermisch hochbelasteten Komponenten verwendet und nach erfolgter Komponentenkühlung der Arbeitsfluid zugeführt. Neben der Erhöhung des Massenstroms durch die Turbine wird eine Leistungssteigerung auch dadurch erzielt, dass der bei konventioneller Kühlung der thermisch hochbelasteten Bauelemente in der Brennkammer und der Turbine notwendige Kühlluftmassenstrom in diesem Falle unmittelbar dem thermischen Leistungsumsatz zur Verfügung steht.

Es sei weiterhin angemerkt, dass die in EP 0 795 685 offenbarte Dampfkühlung zwar eine überlegene Kühleffektivität bietet. Kritisch zu beurteilen ist jedoch die Sicherheit der Kühlung. Eine konventionell gekühlte Gasturbine, bei der ein Teil der verdichteten Luft abgezweigt und durch ein Kühlsystem den thermisch hochbelasteten Komponenten zugeführt wird, bietet insofern eine inhärente Sicherheit, als so lange die Maschine sich dreht, auch zumindest eine Mindestmenge an Kühlluft zur Verfügung steht, insbesondere auch nach einer Schnellabschaltung der Maschine. Bei der in EP 0 795 685 vorgeschlagenen Dampfkühlung hingegen können eine Reihe von Komponenten zum sofortigen Zusammenbruch der Kühlung während des Betriebes der Gasturbine führen, mit den Folgen einer Grosshavarie.

Insofern schlägt beispielsweise die GB 2 236 145 vor, eine Möglichkeit vorzusehen, bei einer Gasturbine mit dampfgekühlten Komponenten fallweise auch Verdichterluft zur Kühlung verwenden zu können. Die EP 0 684 369 schliesslich schlägt vor, das Kühlsystem ohne irgendwelche zwischengeschalteten Absperrorgane mit einer Anzapfstelle geeigneten Druckes am Verdichter zu verbinden. In diesem Kühlluftsystem sind Mittel vorgesehen, um Dampf in das Kühlsystem einzubringen, der Luft aus dem Kühlsystem verdrängt, was durch einen geringen Kühlluftbedarf zu einer höheren Leistung der Gasturbine führt. Gemäss der Lehre der EP 0 684 369 ist die Dampfzuleitung mit einem Stellventil versehen, und eine Messstelle für die Luftmenge ist im Kühlluftsystem integriert. Die zur Kühlung verwendete Dampfmenge wird gemäss diesem Dokument in einem definierten Verhältnis zur Luftmenge geregelt. Die in EP 0 684 369 vorgeschlagene Lösung ist zwar in Bezug auf die Kühlung inhärent sicher, insofern, als beim Ausfall der Dampfversorgung sofort die entsprechende Menge Verdichterluft zur Kühlung zur Verfügung steht; gleichwohl zielt die Lehre des Dokumentes auf eine dampfgekühlte Gasturbine. Die Dampfkühlung im Dauerbetrieb hat - bei allen oben zitierten Vorzügen - den oft entscheidenden Nachteil, dass im Dauerbetrieb grosse Mengen an aufbereitetem hochreinem Wasser zur Dampferzeugung fortlaufend bereitgestellt werden müssen.

Betriebstechnisch bringt also eine Luftkühlung einer Gasturbine erhebliche Vorteile. Hohe Investitionskosten für eine leistungsstarke permanent arbeitende Wasseraufbereitungsanlage können gespart werden. In der Praxis verzichtet man daher häufig auf permanente Wassereinspritzung; die Dampfkühlung hat sich bis heute nicht als Standard durchsetzen können. Andererseits besteht der latente Wunsch, zur Erhöhung der Leistung einer Gasturbine, zumindest temporär Wasser oder Dampf - oder ein anderes geeignetes Medium - in den Gasturbinenkreislauf einzubringen, oder temporär Kühlluft einzusparen, um Lastspitzen abzudecken.

### Darstellung der Erfindung

Hier greift die Erfindung. Ziel der Erfindung ist es also, bei einer Turbomaschine der eingangs genannten Art eine Möglichkeit vorzusehen, zur temporären Leistungssteigerung eine grössere Menge an Luft oder eines anderen Frischgases für die Verbrennung zur Verfügung zu stellen. Damit kann ohne eine Erhöhung der Heissgastemperaturen am Turbineneintritt eine grössere Brennstoffmenge gefeuert werden, woraus eine höhere Leistung resultiert. Bei einer Turbomaschine, welche über Mittel zur Einbringung mindestens eines weiteren Mediums in das Kühlsystem verfügt, wird dies erfindungsgamäss durch Mittel zur Regelung der Strömungsrate des zweiten Mediums als Funktion einer Regelabweichung der Leistung erreicht.

In einem ersten Betriebszustand ist die erfindungsgemässe Turbomaschine durch einen Teilstrom verdichteten oder teilverdichteten Gases aus dem Verdichter gekühlt. Die Leistung wird auf an sich bekannte Weise durch Variation der Heissgastemperatur am Turbineneintritt und der angesaugten Verdichterluftmenge geregelt. Die Turbomaschine befindet sich auf nominaler Vollast, wenn die angesaugte Frischgasmenge maximal ist, und die Heissgastemperatur einen oberen Grenzwert erreicht. Zur weiteren Leistungssteigerung wird ein Leistungsregler aktiviert, der abhängig von einer Regelabweichung der Leistung eine Strömungsrate eines zweiten Mediums in das Kühlsystem hinein steuert. Dieses zweite Medium, bevorzugt Wasser oder Dampf, verdrängt Frischgas aus dem Kühlsystem, welches Frischgas damit unmittelbar für den thermischen Leistungsumsatz zur Verfügung steht. Ein Temperaturregler erhöht die Brennstoffmenge, um die Heissgastemperatur am oberen Grenzwert zu halten. Damit wird die Leistung der Turbomaschine erhöht.

Bei der erfindungsgemässen Lösung wird das weitere Medium nicht permanent benötigt. Dies bedeutet, dass geringere Menge dieses Mediums bereitgestellt werden müssen. So kann beispielsweise eine Wasseraufbereitungsanlage kleiner und damit billiger dimensioniert werden. Diese kann permanent betrieben werden, und aufbereitetes Wasser wird für den Fall benötigter Spitzenlast gespeichert.

Weitere vorteilhafte Ausgestaltungen ergeben sich aus den Unteransprüchen.

Besondere Vorteile bietet die erfindungsgemässe Turbomaschine, wenn sie innerhalb eines Kraftwerks verwendet wird.

Je nach Ausführung der Maschine ergeben sich bevorzugte Betriebsarten.

### Kurze Beschreibung der Zeichnung

Die Erfindung wird nachfolgend anhand der Zeichnung erläutert. Im einzelnen zeigen
- Fig. 1 die ein Schema der Ausgestaltung einer Gasturbine mit einem erfindungsgemässen Kühlluftsystem
- Fig. 2 ein Beispiel für die Applikation der Erfindung an einer Gasturbine mit sequentieller Verbrennung und Zwischenexpansion des Arbeitsmediums

### Weg zur Ausführung der Erfindung

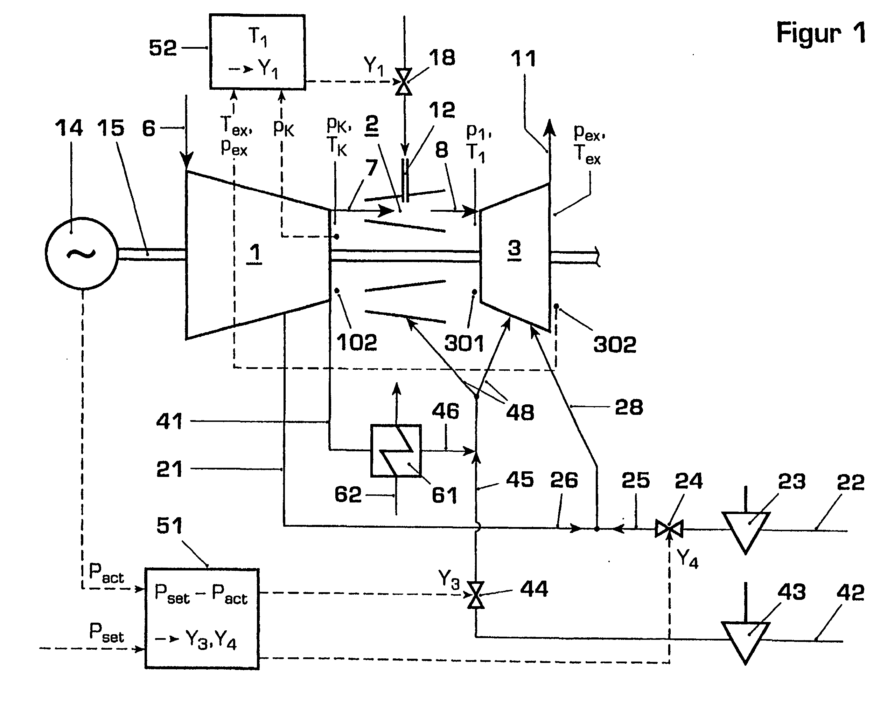

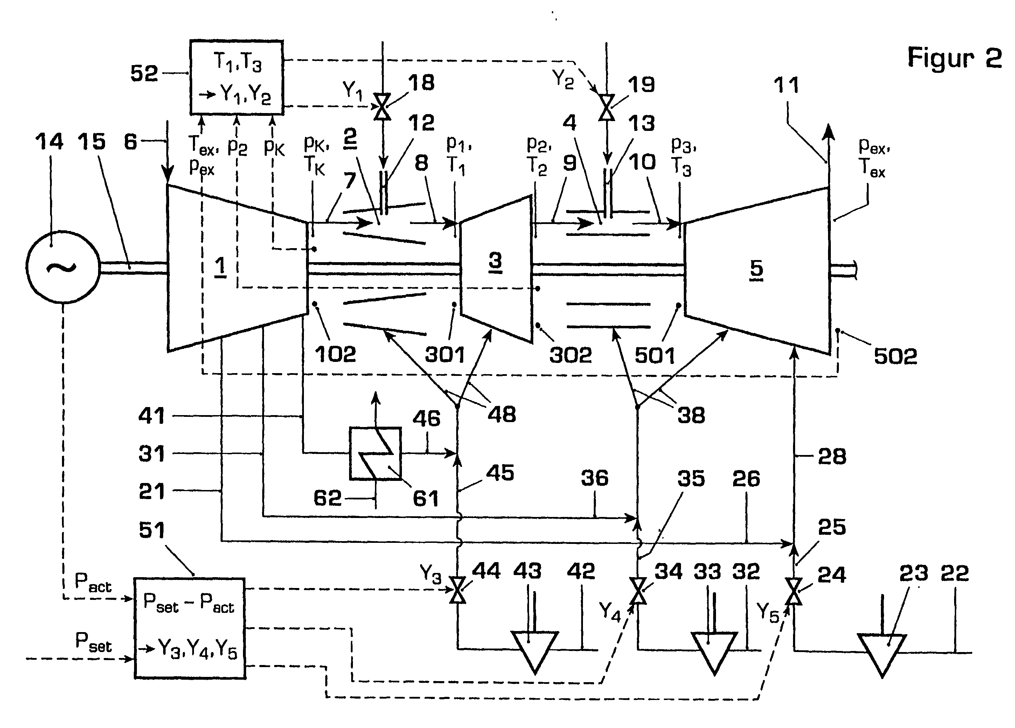

Die Erfindung sei nachfolgend anhand eines Beispiels näher erläutert. Dabei sei unmittelbar auf die Figur 2 zurückgegriffen, da diese alle Merkmale, die in Figur 1 dargestellt sind, ebenfalls enthält. Die Figur zeigt eine Gasturbine mit zweistufiger sequenzieller Verbrennung, wie sie aus der EP 0 620 362 bekannt ist, wobei diese Schrift einen integrierenden Bestandteil der vorliegenden Beschreibung darstellt. Im Ausführungsbeispiel saugt ein Verdichter 1 eine Luftmenge 6 aus der Umgebung an. Der Verdichter 1 stellt an seinem Austritt 102 eine verdichtete Luft 7 mit dem Druck pₖ und der Temperatur T_{K} zur Verfügung. In einem ersten Wärmeerzeuger 2 wird der verdichteten Luft ein Brennstoff 12 zugemischt; durch die Verbrennung entsteht ein Heissgas 8 mit dem Druck p₁ und der Temperatur T₁ am Eintitt 301 in eine erste Turbine 3. In dieser ersten Turbine findet eine Teilentspannung auf einen Druck p₂ und eine Temperatur T₂ statt. Dem teilentspannten Heissgas 9 am Austritt 302 aus der ersten Turbine wird in einem zweiten Wärmeerzeuger 4 eine weitere Brennstoffmenge 13 zugemischt und verbrannt, wobei der Druck ungefähr konstant bleibt, die Temperatur am Eintritt 501 in eine zweite Turbine 5 jedoch auf T₃ erhöht wird. In der Turbine 5 findet eine Entspannung auf den Druck pₑₓ statt, wobei dieser Druck im wesentlichen dem Umgebungsdruck entspricht, und am Turbinenaustritt 502 hat das Abgas 11 noch die Temperatur Tₑₓ. Das Abgas 11 kann unmittelbar in einen Kamin geleitet werden; alternativ kann aber die latente Wärmeenergie auch in einem hier nicht dargestellten Abhitzekessel zur Dampferzeugung genutzt werden.

Die Turbinen sitzen auf einer gemeinsamen Welle 15, und treiben über diese den Verdichter 1 und einen Generator 14 an. Dieses Ausführungsbeispiel stellt jedoch keine Einschränkung hinsichtlich der Bauart der Turbomaschine dar. Selbstverständlich können auch zwei oder mehr Verdichter mit einer Zwischenkühlung vorhanden sein, oder der Generator kann über ein Getriebe mit der Turbomaschine verbunden sein. Ebensogut ist es auch möglich, Turbine 3 und Verdichter 1 auf einer gemeinsamen Welle mit dem Wärmeerzeuger 2 als Gasgenerator zu betreiben, und die Turbine 5 mit dem Generator oder einer anderen mechanischen Last auf einer zweiten Welle als Nutzleistungsturbine zu betreiben, und dergleichen mehr: Die Anordnung der Turbomaschine ist hier nicht erfindungswesentlich.

Figur 1 zeigt die Realisierung der Erfindung in einer Gasturbine mit nur einer Brennkammer. Nach Erläuterung der Figur 2 sollte Figur 1 für den Durchschnittsfachmann ohne weiteres verständlich sein.

Aufgrund der hohen Heissgastemperaturen in den Wärmeerzeugern 2, 4 und den Turbinen 3, 5 müssen dort thermisch hochbelastete Bauelemente gekühlt werden. Zur Kühlung werden Kühlmedien 28, 38, 48 durch die hier nicht detailliert dargestellten zu kühlenden Komponenten hindurch geführt und nehmen dort Wärme auf; schliesslich werden die bereits erwärmten Kühlmedien dem Arbeitsfluid 8, 9, 10 der Turbomaschine wieder zugemischt. Hierbei werden gerade die am höchsten belasteten Komponenten von einem Film aus Kühlmittel überströmt. Daraus folgt, dass Kühlmittel auch an Stellen höchsten Druckes zugemischt wird.

Der minimal erforderliche Druck des Kühlmittels ist vom Druck an der Stelle der Zumischung gegeben, wobei durch das über ein Kühlsystem zur Verfügung stehende Druckgefälle ein erforderlicher Kühlmassenstrom bei gegebenen Drosselstellen innerhalb des Kühlsystems sichergestellt sein muss.

Wenn die Kühlung der Bauelemente bei stark unterschiedlichen Drücken erfolgt, was allgemein der Fall ist, ist es von Vorteil, Kühlmittel bei entsprechend angepassten Drücken zur Verfügung zu stellen. Im Ausführungsbeispiel sind drei Stränge 21, 31, 41 eines Kühlsystems angedeutet, die bei jeweils geeigneten Druckniveaus mit dem Verdichter 1 verbunden sind. Der Hochdruckstrang 41 des Kühlsystems ist hierbei mit dem Verdichteraustritt 102 verbunden. Insbesondere dann, wenn Kühlluft bei sehr hohem Druck entnommen wird, und der Verdichter ohne Zwischenkühlung arbeitet, liegt diese Hochdruckkühlluft bei vergleichsweise hohen Temperaturen vor. Es ist dann sinnvoll, die zu Kühlzwecken entnommene verdichtete Luft zunächst selbst zu kühlen. Zu diesem Zweck ist im Ausführungsbeispiel im Hochdruckstrang 41 des Kühlsystems ein Kühler 61 vorgesehen, den die Hochdruck-Kühlluft 46 nach der Entnahme aus dem Verdichter durchströmt. Je nach Auslegung des Systems ist der Kühler 61 nicht zwingend; andererseits könnten auch weitere Stränge des Kühlsystems mit Kühlern analog zum Kühler 61 ausgestattet sein.

In den Kühlsträngen sind Mittel zur Einbringung mindestens eines weiteren Kühlmediums 25, 35, 45, beispielsweise Wasser oder Dampf, vorgesehen. Diese Medien werden über Leitungen 22, 32, 42 herangeführt, wobei in diesen Leitungen zwingend Regelorgane 24, 34, 44, und optional Absperrorgane 23, 33, 43 eingebaut sind.

Die zweckmässige Zufuhr von Wasser oder Dampf ist unten zu diskutieren. Zunächst sei das der Leistungssteigerung zugrundeliegende Konzept erläutert.

Im Nominalbetrieb der Turbomaschine sind die Regel- und Absperrorgane 23, 24, 33, 34, 43, 44 geschlossen. Als Kühlmittel 28, 38, 48 strömt dann nur verdichtete Luft auf unterschiedlichen Druckniveaus den Wärmeerzeugern 2, 4 und Turbinen 3, 5 zu. Zur Leistungserhöhung der Turbomaschine kann in diesem Betrieb einerseits die angesaugte Luftmenge 6 auf ein Maximum gesteigert werden, das der Verdichter 1 zu fördern vermag, andererseits können die den beiden Brennkammern zugeführten Brennstoffmengen 12, 13 durch Öffnen der Brennstoff-Regelorgane 18, 19 erhöht werden. Die in Folge steigenden Temperaturen T₁ und T₃ des Heissgases 8 am Eintritt 301 der ersten Turbine 3 respektive des Heissgases 10 am Eintritt 501 der zweiten Turbine 5 sind nach oben begrenzt. Dabei können diese Temperaturen nicht ohne weiteres unmittelbar gemessen werden; vielmehr erfasst ein Temperaturregler 52 unterschiedliche Drücke innerhalb der Maschine, sowie die Temperatur Tₑₓ des Abgases 11 am Austritt 502 der letzten Turbine, und ermittelt hieraus die geforderten Heissgastemperaturen. Wenn Maximalleistung gefordert ist, regelt der Temperaturregler 52 mittels der Steuergrössen Y₁ und Y₂ die Brennstoffmengen 12, 13 über die Regelorgane 18, 19 so, dass die Temperaturen T₁ und T₃ bei maximaler Luftmenge 6 stets an der zulässigen Obergrenze liegen. Dabei ist allerdings zu berücksichtigen, dass nicht der gesamte Ansaugluftstrom 6 für den thermischen Leistungsumsatz in den Wärmeerzeugern 2, 4 zur Verfügung steht, da bei modernen Gasturbinen mit hohen Prozesstemperaturen ein nicht unerheblicher Teilstrom an verdichteter oder teilverdichteter Luft über die Leitungen 21, 31, 41 als Kühlmittel 28, 38, 48 zunächst dem Prozess entzogen und diesem dann unter Umgehung der Verbrennung wieder zugeführt wird.

Zur Leistungserhöhung kann nun über die Leitungen 22, 32, 42 zusätzliches Medium der Kühlluft 26, 36, 46 beigemischt werden. Dieses zusätzliche Medium ist im einfachsten Fall Wasser, das in der Kühlluft verdampft, und unter anderem dessen Temperatur senkt. Andererseits könnte es sich hierbei auch um Dampf handeln, der einem der Turbomaschine nachgeschalteten Abhitzedampferzeuger oder auch als Abzapfdampf einer Dampfturbine in einer Kombinalage entnommen wird, wobei die Entnahmestellen zweckmässig jeweils bei einem Druck gewählt werden, der dem jeweiligen Druck in den Kühlsträngen 21, 31, 41 angepasst ist. Eine solche Entnahme von Dampf zu Kühlzwecken ist beispielsweise aus der EP 0 795 685 bekannt, welche Druckschrift einen integrierenden Bestandteil der vorliegenden Beschreibung darstellt.

Weiterhin zu erwähnen ist, dass der Einsatz von Wasser oder Dampf in die Kühlmittel 28, 38, 48 mutmasslich immer mit Wirkungsgradeinbussen verbunden ist, da bei einer Wassereinspritzung die im Abgas 11 enthaltene latente Wärme ansteigt, und einem Wasser-Dampf-Kreislauf entnommener Dampf sich in einer Dampfturbine wesentlich effizienter einsetzen liesse. Hingegen kann die Verwendung der erfindungsgemässen Schaltung und des erfindungsgemässen Verfahrens nahezu ohne Zeitverzug die Leistungsabgabe erheblich erhöhen, wie nachfolgend beschrieben.

Bei der Forderung nach Spitzenlast tritt der Leistungsregler 51 in Aktion. Dieser vergleicht eine am Generator gemessene Leistungsabgabe P_{act} - dies kann ohne weiteres auch die Leistungsabgabe eines Kombiblockes sein - mit einer geforderten Leistung Pₛₑₜ und reagiert auf Abweichungen durch eine Veränderung der Steuergrössen Y₃, Y₄, und Y₅, die ihrerseits auf die Regelorgane 24, 34, 44 wirken. Wenn also die tatsächliche Leistung P_{act} kleiner als die geforderte Leistung Pₛₑₜ ist, werden die Regelorgane 24, 34, 44 geöffnet, und es strömt Wasser oder Dampf in das Kühlsystem ein, so dass als Kühlmittel 28, 38, 48 eine Luft-Dampf-Mischung variabler Zusammensetzung vorliegt. Hierbei können die Wasser- oder Dampfmengen, die den einzelnen Strängen 21, 31, 41 des Kühlsystems zugemischt werden, in Abhängigkeit von einem Betriebskonzept unabhängig voneinander geregelt werden.

Einerseits steigt die Leistungsabgabe der Turbomaschine aufgrund des zusätzlich die Turbinen 3, 5 durchströmenden Massenstroms. Erfindungswesentlich ist jedoch, dass durch das dem Kühlsystem zugeführte Medium verdichtete Luft aus dem Kühlsystem verdrängt wird und somit durch die Wärmeerzeuger 2, 4 strömt. In Folge sinken die Temperaturen T₁ und T₃, und der Temperaturregler 52 erhöht die Brennstoffmengen 12, 13. Durch diese Zusammenspiel von Temperaturregler 52 und Leistungsregler 51 werden die Mengen an zusätzlichem Kühlmedium und Brennstoff sukzessive soweit erhöht, bis entweder die Leistungsabgabe der geforderten Leistung entspricht, oder im Extremfall die gesamten Kühlmittelströme 28, 38, 48 nur aus Dampf bestehen. Eine Rückströmung des Kühlmittels in den Verdichter 1 sollte hingegen möglichst vermieden werden.

Wie in der EP 0 795 685 beschrieben, wird bei reiner Dampfkühlung die Kühleffektivität erhöht. Damit eröffnet sich ein zusätzliches Potential zur kurzzeitigen Leistungssteigerung, indem die Turbineneintrittstemperaturen T₁ und T₃ über ihre nominalen Grenzwerte angehoben werden.

Selbstverständlich ist es nicht zwingend, alle Kühlstränge mit zusätzlichem Kühlmedium zu beaufschlagen; jedoch, diese Entscheidung muss als Ergebnis einer Nutzen-Aufwand-Analyse auf der Grundlage einer detaillierten Prozessrechnung erfolgen. So könnten im Ausführungsbeispiel nur die Stränge 31 und 41 mit Mitteln zur Einbringung eines weiteren Mediums versehen sein, während der Niederdruckstrang rein mit Verdichterluft als Kühlmedium betrieben wird.

Zweckmässig ist es hingegen in den allermeisten Fällen, beim Einsatz eines Kühlers 61 das zusätzliche Medium stromab dieses Kühlers einzubringen. Damit ist der Massenstrom des zu kühlenden Mediums minimiert, andererseits ist auch, gerade dann, wenn das Medium 45 kühler als die dem Verdichter entnommene Luft ist, das treibende Temperaturgefälle am grössten. Bei bestimmten thermodynamischen Randbedingungen und Bauarten des Kühlers kann es sich allerdings auch als zweckmässig erweisen, das Medium 45 stromauf des Kühlers 61 einzuspeisen.

Es kann sich weiterhin als zweckmässig erweisen, als Kühlmittel 62 des Kühlers 61 Wasser einzusetzen und dieses vorzuwärmen oder gegebenenfalls auch Dampf zu erzeugen. Dieser könnte entweder seinerseits in das Kühlsystem eingebracht werden, oder im Wasser-Dampf-Kreislauf einer Kombi-Anlage genutzt werden.

Letztlich sei noch erwähnt, dass es bei der Realisierung des erfindungsgemässen Systems von Vorteil, wenn nicht oft notwendig, ist, das Kühlsystem zumindest teilweise ausserhalb des Druckzylinders der Turbomaschine zu führen.

Die erfindungsgemässe Vorrichtung wird mit Vorteil in Kraftwerksgasturbinen genutzt, sowohl bei einfachen Gasturbinenkraftwerken als auch in Kombi-Anlagen. In einem einfachen Kraftwerk wird einfach die Leistung erhöht, um Spitzenlast zu erzeugen. In einem Kombi-Kraftwerk kann ebenfalls die Leistungsabgabe kurzzeitig erhöht werden; die Anwendung eines erfindungsgemässen Verfahrens zur Leistungssteigerung kann aber auch nützlich sein, um die Reaktionszeit einer gesamten Kombi-Anlage zu verringern. So kann beispielsweise die Forderung, die Blocklast von einer Last Nahe Vollast auf Volllast zu erhöhen, aufgrund der Trägheit des Dampferzeugers und der Dampfturbine nur mit vergleichweise hohem Zeitaufwand erfüllt werden. Nunmehr kann ein Teil des Dampfes zur Gasturbinenkühlung verwendet werden, wodurch zwar die Dampfturbinenleistung zunächst absinkt, die Gasturbine aber spontan mehr Leistung zur Verfügung stellen kann. Damit steigt der Abgasmassenstrom der Gasturbine, und die Dampfproduktion wird erhöht. In dem Masse, in dem die Dampfturbinenleitung steigt, kann die Gasturbine sukzessive wieder in den Normalbetrieb überführt werden.

### Bezugszeichenliste

- 1: Verdichter
- 2: Wärmeerzeuger
- 3: Turbine
- 4: Wärmeerzeuger
- 5: Turbine
- 6: Luftmenge aus der Umgebung
- 7: Verdichtete Luft
- 8: Heissgass, Arbeitsfluid
- 9: Teilentspanntes Heissgas, Arbeitsfluid
- 10: Arbeitsfluid
- 11: Abgas
- 12: Brennstoffmenge zum erstenWärmeerzeuger
- 13: Brennstoffmenge zum zweiten Wärmeerzeuger
- 14: Generator
- 15: Welle
- 18,19: Brennstoffregelorgane
- 21, 31, 41: Stränge eines Kühlsystems
- 22, 32, 42: Leitungen
- 23, 33, 43: Absperrorgane
- 24, 34, 44: Regelorgane
- 25, 35, 45: Kühlmedien
- 26, 36, 46: Kühlluft
- 28, 38, 48: Kühlmittel
- 51: Leistungsregler
- 52: Temperaturregler
- 61: Kühler
- 62: Kühlmittel
- 102: Verdichteraustritt
- 301: Eintritt in die erste Turbine
- 302: Austritt aus der ersten Turbine
- 501: Eintritt in die zweite Turbine
- 502: Austritt aus der zweiten Turbine

## Patentansprüche

1. Turbomaschine, umfassend mindestens einen Wärmeerzeuger (2, 4) und mindestens eine Turbine (3, 5), in welchem Wärmeerzeuger mindestens ein Brennstoff (12, 13) einem gespannten Gas (7, 9) zugeführt und verbrannt wird, und wobei ein aus der Verbrennung resultierendes gespanntes Heissgas (8, 10) zur Erzeugung einer mechanischen Leistung in der Turbine entspannt wird, und welche Turbomaschine über ein Kühlsystem verfügt, welches Kühlsystem mindestens einen Teilstrom (26, 36, 46) eines verdichteten oder teilverdichteten Gases unter Umgehung wenigstens eines Wärmeerzeugers der Heissgasströmung zuführt, wobei der Teilstrom vor der Einbringung in die Heissgasströmung thermisch hochbelastete Bauelemente des Wärmeerzeugers und der Turbine zu deren Kühlung durchströmt und/oder umströmt, wodurch der durch das Kühlsystem strömende Teilstrom nicht zur Verbrennung genutzt ist, sowie Mittel zur Einbringung mindestens eines weiteren Mediums (25, 35, 45) in das Kühlsystem, welches weitere Medium Gas aus dem Kühlsystem verdrängt, welches Gas **dadurch** unmittelbar für den thermischen Leistungsumsatz zur Verfügung steht, **gekennzeichnet durch** Mittel (24, 34, 44, 51) zur Regelung der Strömungsrate des zweiten Mediums als Funktion einer Regelabweichung (Pₛₑₜ - P_{act}) der Leistung der Turbomaschine.

2. Turbomaschine nach Anspruch 1, **dadurch gekennzeichnet, dass** die Mittel zur Regelung der Strömungsrate des zweiten Mediums Regelorgane (24, 34, 44) und wenigstens einen Leistungsregler (51) beinhalten, wobei Eingangsgrössen des Leistungsreglers eine Ist-Leistung (P_{act}) als Regelgrösse und eine geforderte Soll-Leistung (Pₛₑₜ) als Führungsgrösse umfassen, und wobei Ausgangsgrössen die Steuergrössen (Y₃, Y₄, Y₅) der Regelorgane (24, 34, 44) zur Verstellung der Menge des weiteren Mediums als Funktion der Regelabweichung (P_{act} - Pₛₑₜ) der Leistung umfassen.

3. Turbomaschine nach Anspruch 1, **gekennzeichnet durch** einen Temperaturregler (52), welcher beim Erreichen von Temperaturgrenzwerten (T₁, T₃) den Leistungsregler (51) aktiviert.

4. Turbomaschine nach Anspruch 1, **dadurch gekennzeichnet, dass** das weitere Medium Dampf ist.

5. Turbomaschine nach Anspruch 1, **dadurch gekennzeichnet, dass** das weitere Medium Wasser ist.

6. Turbomaschine nach Anspruch 4, **dadurch gekennzeichnet, dass** zur Erzeugung des Dampfes stromab der Turbomaschine ein Abhitzekessel angeordnet ist.

7. Turbomaschine nach Anspruch 1, **dadurch gekennzeichnet, dass** in dem Kühlsystem ein Kühler (61) vorhanden ist.

8. Turbomaschine nach Anspruch 7, **dadurch gekennzeichnet, dass** die Mittel zur Einbringung des weiteren Mediums stromab des Kühlers (61) angeordnet sind.

9. Turbomaschine nach Anspruch 1, **dadurch gekennzeichnet, dass** die Turbomaschine über mindestens zwei Wärmeerzeuger (2, 4) verfügt, die in Bezug auf die Heissgasströmung in Reihe geschaltet sind, dergestalt, dass ein erster Wärmeerzeuger von einer verdichteten Luft (7) angeströmt ist, und ein im ersten Wärmeerzeuger erzeugtes gespanntes Heissgas (8) nacheinander alle stromab folgenden Wärmeerzeuger durchströmt, dass zwischen jeweils zwei Wärmeerzeugern eine Turbine (3) angeordnet ist, in der eine Teilentspannung des Heissgases (8) stattfindet, und dass stromab eines letzten Wärmeerzeugers (4) eine letzte Turbine (5) angeordnet ist, in welcher letzten Turbine eine Entspannung des Heissgases auf einen Enddruck (pₑₓ) stattfindet.

10. Turbomaschine nach Anspruch 1, **dadurch gekennzeichnet, dass** mindestens ein erster Wärmeerzeuger und eine erste Turbine oder Teilturbine mit einem ersten Strang (41) des Kühlsystems verbunden sind, und mindestens eine Anzahl weiterer unmittelbar nacheinander angeordneter Wärmeerzeuger und Turbinen oder Teilturbinen mit mindestens einem weiteren Strang (21, 31) des Kühlsystems verbunden sind, wobei die Stränge des Kühlsystems voneinander getrennt sind.

11. Turbomaschine nach Anspruch 9, **dadurch gekennzeichnet, dass** alle Turbinen auf einer gemeinsamen Welle (15) angeordnet sind.

12. Turbomaschine nach Anspruch 1, **dadurch gekennzeichnet, dass** ein gespanntes Gas (7) aus mindestens einem Turboverdichter (1) stammt.

13. Turbomaschine nach Anspruch 12, **dadurch gekennzeichnet, dass** der Turboverdichter von mindestens einer Turbine angetrieben ist.

14. Turbomaschine nach Anspruch 13, **dadurch gekennzeichnet, dass** mindestens eine Turbine und ein Verdichter auf einer gemeinsamen Welle angeordnet sind.

15. Verwendung der Turbomaschine nach Anspruch 1 in einem Kraftwerk, wobei mindestens eine Turbine einen Generator antreibt.

16. Verfahren zum Betrieb einer Turbomaschine, wobei einem gespannten Gas (7, 9) in wenigstens einem Wärmeerzeuger (2, 4) wenigstens eine Brennstoffmenge (12, 13) zugeführt wird, und wobei gespanntes Heissgas in wenigstens einer Turbine (3, 5) unter Abgabe einer mechanischen Leistung entspannt wird, und in welcher Turbomaschine wenigstens ein Teilstrom (26, 26, 46) eines verdichteten oder teilverdichteten Gases als erstes Kühlmedium zur Kühlung heissgasbeaufschlagter Maschinenkomponenten in wenigstens einem Kühlsystem um wenigstens einen Wärmeerzeuger herumgeführt wird, wobei die Leistung durch die Brennstoffmenge geregelt wird, welche Brennstoffmenge durch das Erreichen eines Grenzwertes der Heissgastemperatur (T₁, T₃) begrenzt ist, **dadurch gekennzeichnet, dass** zur Leistungssteigerung der Turbomaschine ein Leistungsregler (51) aktiviert wird, welcher in Abhängigkeit von einer Regelabweichung (Pₛₑₜ - P_{act}) über Regelorgane (24, 34, 44) eine Menge eines weiteren Mediums (25, 35, 45) regelt, welche in ein Kühlsystem eingebracht wird und erstes Kühlmedium aus diesem Kühlsystem verdrängt, welches verdrängte erste Kühlmedium der Verbrennung zur Verfügung steht, und, dass ein Temperaturregler (52) die Heissgastemperatur (T₁, T₃) am Grenzwert hält, wodurch der Temperaturregler (52) die Brennstoffmenge (12, 13) und somit die Leistung (P_{act}) erhöht.

17. Verfahren nach Anspruch 16, **dadurch gekennzeichnet, dass** ein Leistungsregler (51) die Menge des weiteren Mediums so regelt, dass bei der geforderten Leistung der Temperaturregler die Heissgastemperatur genau am Grenzwert hält.

18. Verfahren nach Anspruch 16, wobei das weitere Medium Dampf ist, **dadurch gekennzeichnet, dass** der in das Kühlsystem einzubringende Dampf einem Abhitzekessel entnommen wird, und dass die Entnahmestelle aus diesem Kessel so gewählt wird, dass der Druck des Dampfes mit dem Druck der verdichteten Luft im Kühlsystem korrespondiert.

19. Verfahren nach Anspruch 16, wobei das weitere Medium Dampf ist, **dadurch gekennzeichnet, dass** der in das Kühlsystem einzubringende Dampf einer Abzapfstelle einer Dampfturbine entnommen wird, und dass die Entnahmestelle so gewählt ist, dass der Druck des Dampfes mit dem Druck der verdichteten Luft im Kühlsystem korrespondiert.

20. Verfahren nach Anspruch 16, **dadurch gekennzeichnet, dass** bei Zufuhr eines weiteren Mediums die Grenzwerte der Heissgastemperatur erhöht werden.

21. Verfahren nach einem der Ansprüche 16 bis 20, wobei die Turbomaschine über mindestens zwei Wärmeerzeuger verfügt, die in Bezug auf die Heissgasströmung in Reihe geschaltet sind, dergestalt, dass ein erster Wärmeerzeuger von einer verdichteten Luft angeströmt ist, und ein im ersten Wärmeerzeuger erzeugtes gespanntes Heissgas nacheinander alle stromab folgenden Wärmeerzeuger durchströmt, dass zwischen jeweils zwei Wärmeerzeugern eine Turbine angeordnet ist, in der eine Teilentspannung des Heissgases stattfindet, und dass stromab des letzten Wärmeerzeugers eine letzte Turbine angeordnet ist, in welcher letzten Turbine eine Entspannung des Heissgases auf einen Enddruck stattfindet, und wobei ein erster Wärmeerzeuger und eine erste Turbine oder Teilturbine mit einem ersten Strang des Kühlsystems ausgestattet sind, und mindestens eine Anzahl weiterer unmittelbar nacheinander angeordneter Wärmeerzeuger und Turbinen oder Teilturbinen mit mindestens einem weiteren Strang des Kühlsystems ausgestattet sind, welche Stränge des Kühlsystems voneinander getrennt sind, wobei die unterschiedlichen Stränge des Kühlsystems auf unterschiedlichen Druckniveaus arbeiten, **dadurch gekennzeichnet, dass** die Zuführung des Mediums so gewählt wird, dass der Druck des Mediums dem Druck im jeweiligen Strang des Kühlsystems angepasst wird.

## Claims

1. Turbomachine, comprising at least one heat generator (2, 4) and at least one turbine (3, 5), in which heat generator at least one fuel (12, 13) is supplied to a pressurized gas (7, 9) and is burnt, a pressurized hot gas (8, 10) which results from combustion being expanded in order to generate mechanical power in the turbine, the said turbomachine having a cooling system, which cooling system supplies at least one part-stream (26, 36, 46) of a compressed or partly compressed gas to the hot-gas flow, at the same time bypassing at least one heat generator, the part-stream, before being introduced into the hot-gas flow, flowing through and/or flowing around components of the heat generator and the turbine which are subjected to high thermal load for the cooling of these, with the result that the part-stream flowing through the cooling system is not utilized for combustion, and means for introducing at least one further medium (25, 35, 45) into the cooling system, the said further medium displacing gas out of the cooling system, which gas is thereby directly available for the implementation of thermal power, **characterized by** means (24, 34, 44, 51) for regulating the flow rate of the second medium as a function of a power control deviation (Pₛₑₜ - P_{act}) of the turbomachine.

2. Turbomachine according to Claim 1, **characterized in that** the means for regulating the flow rate of the second medium contain regulating members (24, 34, 44) and at least one power regulator (51), input variables of the power regulator comprising an actual power (P_{act}) as a regulating variable and a required set power (Pₛₑₜ) as a command variable, and output variables comprising the control variables (Y₃, Y₄, Y₅) of the regulating members (24, 34, 44) for adjusting the quantity of the further medium as a function of the power control deviation (P_{act} - Pₛₑₜ).

3. Turbomachine according to Claim 1, **characterized by** a temperature regulator (52) which activates the power regulator (51) when temperature limit values (T₁, T₃) are reached.

4. Turbomachine according to Claim 1, **characterized in that** the further medium is steam.

5. Turbomachine according to Claim 1, **characterized in that** the further medium is water.

6. Turbomachine according to Claim 4, **characterized in that**, for generating the steam, a waste-heat recovery boiler is arranged downstream of the turbomachine.

7. Turbomachine according to Claim 1, **characterized in that** a cooler (61) is present in the cooling system.

8. Turbomachine according to Claim 7, **characterized in that** the means for introducing the further medium are arranged downstream of the cooler (61).

9. Turbomachine according to Claim 1, **characterized in that** the turbomachine has at least two heat generators (2, 4) which are connected in series with respect to the hot-gas flow, in such a way that compressed air (7) flows onto a first heat generator and a pressurized hot gas (8) generated in the first heat generator flows in succession through all the downstream heat generators, and **in that** a turbine (3), in which a partial expansion of the hot gas (8) takes place, is arranged in each case between two heat generators, and **in that** a last turbine (5) is arranged downstream of a last heat generator (4), in which last turbine an expansion of the hot gas to a final pressure (pₑₓ) takes place.

10. Turbomachine according to Claim 1, **characterized in that** at least one first heat generator and one first turbine or part-turbine are connected to a first section (41) of the cooling system, and at least a number of further heat generators and turbines or part-turbines arranged directly in succession are connected to at least one further section (21, 31) of the cooling system, the sections of the cooling system being separated from one another.

11. Turbomachine according to Claim 9, **characterized in that** all the turbines are arranged on a common shaft (15).

12. Turbomachine according to Claim 1, **characterized in that** a pressurized gas (7) originates from at least one turbocompressor (1).

13. Turbomachine according to Claim 12, **characterized in that** the turbocompressor is driven by at least one turbine.

14. Turbomachine according to Claim 13, **characterized in that** at least one turbine and one compressor are arranged on a common shaft.

15. Use of the turbomachine according to Claim 1 in a power station, at least one turbine driving a generator.

16. Method for operating a turbomachine, at least one fuel quantity (12, 13) being supplied to a pressurized gas (7, 9) in at least one heat generator (2, 4), and pressurized hot gas in at least one turbine (3, 5) being expanded, at the same time with the output of mechanical power, and in which turbomachine at least one part-stream (26, 26, 46) of a compressed or partly compressed gas is led as a first cooling medium in at least one cooling system around at least one heat generator for the cooling of machine components acted upon by hot gas, the power being regulated by means of the fuel quantity, which fuel quantity is limited by the reaching of a limit value of the hot-gas temperature (T₁, T₃), **characterized in that**, for an increase in the power of the turbomachine, a power regulator (51) is activated, which, via regulating members (24, 34, 44), regulates as a function of a control deviation (Pₛₑₜ - P_{act}) a quantity of a further medium (25, 35, 45) which is introduced into a cooling system and displaces a first cooling medium out of this cooling system, the said displaced first cooling medium being available for combustion, and **in that** a temperature regulator (52) maintains the hot-gas temperature (T₁, T₃) at the limit value, with the result that the temperature regulator (52) increases the fuel quantity (12, 13) and therefore the power (P_{act}).

17. Method according to Claim 16, **characterized in that** a power regulator (51) regulates the quantity of the further medium in such a way that, in the case of the required power, the temperature regulator maintains the hot-gas temperature exactly at the limit value.

18. Method according to Claim 16, the further medium being steam, **characterized in that** the steam to be introduced into the cooling system is extracted from a waste-heat recovery boiler, and **in that** the extraction point from this boiler is selected such that the pressure of the steam corresponds to the pressure of the compressed air in the cooling system.

19. Method according to Claim 16, the further medium being steam, **characterized in that** the steam to be introduced into the cooling system is extracted from a tapping point of a steam turbine, and **in that** the extraction point is selected such that the pressure of the steam corresponds to the pressure of the compressed air in the cooling system.

20. Method according to Claim 16, **characterized in that**, when a further medium is supplied, the limit values of the hot-gas temperature are increased.

21. Method according to one of Claims 16 to 20, the turbomachine having at least two heat generators which are connected in series with respect to the hot-gas flow, in such a way that compressed air flows onto a first heat generator, and a pressurized hot gas generated in the first heat generator flows in succession through all the downstream heat generators, in that a turbine, in which a partial expansion of the hot gas takes place, is arranged in each case between two heat generators, and in that a last turbine is arranged downstream of the last heat generator, in which last turbine an expansion of the hot gas to a final pressure takes place, and a first heat generator and a first turbine or part-turbine being equipped with a first section of the cooling system, and at least a number of further heat generators and turbines or part-turbines arranged directly in succession being equipped with at least one further section of the cooling system, which sections of the cooling system are separated from one another, the various sections of the cooling system operating at different pressure levels, **characterized in that** the supply of the medium is selected such that the pressure of the medium is adapted to the pressure in the respective section of the cooling system.

## Revendications

1. Turbomachine comportant un générateur de chaleur (2, 4) au moins et une turbine (3, 5) au moins, dans lequel générateur de chaleur un combustible (12, 13) au moins est alimenté en un gaz précontraint (7, 9) et brûlé, et un.gaz chaud (8, 10) précontraint résultant de la combustion étant détendu dans la turbine en vue de générer une puissance mécanique, et laquelle turbomachine dispose d'un système de refroidissement, lequel système de refroidissement alimente le flux de gaz chaud en un flux partiel (26, 36, 46) au moins d'un gaz comprimé ou partiellement comprimé, en contournant un générateur de chaleur au moins, le flux partiel passant à travers et/ou le long d'éléments de construction fortement sollicités thermiquement du générateur de chaleur et de la turbine en vue de leur refroidissement, avant l'introduction dans le flux de gaz chaud, de sorte que le flux partiel passant à travers le système de refroidissement n'est pas utilisé pour la combustion, ainsi que des moyens pour introduire un autre agent (25, 35, 45) au moins dans le système de refroidissement, lequel autre agent refoule du gaz du système de refroidissement, lequel gaz est de ce fait directement disponible pour la conversion thermique de la puissance, **caractérisée par** des moyens (24, 34, 44, 51) pour régler le débit d'écoulement du second agent en fonction d'un écart de réglage (Pₛₑₜ - P_{act}) de la puissance de la turbomachine.

2. Turbomachine selon la revendication 1, **caractérisée en ce que** les moyens pour régler le débit d'écoulement du second agent comprennent des organes de réglage (24, 34, 44) et un régulateur de puissance (51) au moins, les grandeurs d'entrée du régulateur de puissance comportant une puissance effective (P_{act}) en tant que grandeur de réglage et une puissance de consigne requise (Pₛₑₜ) en tant que grandeur de référence et les grandeurs de sortie comportant les grandeurs de commande (Y₃, Y₄, Y₅) des organes de réglage (24, 34, 44) en vue d'ajuster la quantité de l'autre agent en fonction de l'écart de réglage (Pₛₑₜ - P_{act}) de la puissance de la turbomachine.

3. Turbomachine selon la revendication 1, **caractérisée par** un régulateur de température (52), lequel active le régulateur de puissance (51) lorsque des valeurs limites de température (T₁, T₃) sont atteintes.

4. Turbomachine selon la revendication 1, **caractérisée en ce que** l'autre agent est de la vapeur.

5. Turbomachine selon la revendication 1, **caractérisée en ce que** l'autre agent est de l'eau.

6. Turbomachine selon la revendication 4, **caractérisée en ce qu'**une chaudière chauffée par la chaleur perdue est disposée en aval de la turbomachine en vue de générer la vapeur.

7. Turbomachine selon la revendication 1, **caractérisée en ce que** le système de refroidissement renferme un refroidisseur (61).

8. Turbomachine selon la revendication 7, **caractérisée en ce que** le moyen pour introduire l'autre agent est disposé en aval du refroidisseur (61).

9. Turbomachine selon la revendication 1, **caractérisée en ce que** la turbomachine dispose de deux générateurs de chaleur (2, 4) au moins, lesquels sont montés en série par rapport au flux de gaz chaud, de sorte qu'un air comprimé (7) afflue dans un premier générateur de chaleur et un gaz chaud (8) précontraint généré dans le premier générateur de chaleur passe successivement à travers tous les générateurs de chaleur suivants disposés en aval, **en ce qu'**une turbine (3), dans laquelle une détente partielle du gaz chaud (8) se produit, est disposée chaque fois entre deux générateurs de chaleur, et **en ce qu'**une dernière turbine (5), dans laquelle une détente du gaz chaud à une pression finale (pₑₓ) se produit, est disposée en aval du dernier générateur de chaleur (4).

10. Turbomachine selon la revendication 1, **caractérisée en ce qu'**un premier générateur de chaleur au moins et une première turbine ou partie de turbine au moins sont reliés à un premier conduit (41) du système de refroidissement et un nombre au moins d'autres générateurs de chaleur et de turbines ou parties de turbines disposés directement les uns derrière les autres sont reliés à un autre conduit (21, 31) au moins du système de refroidissement, les conduits du système de refroidissement étant séparés les uns des autres.

11. Turbomachine selon la revendication 9, **caractérisée en ce que** toutes les turbines sont disposées sur un arbre commun (15).

12. Turbomachine selon la revendication 1, **caractérisée en ce qu'**un gaz précontraint (7) provient d'un turbocompresseur (1) au moins.

13. Turbomachine selon la revendication 12, **caractérisée en ce que** le turbocompresseur est entraîné par une turbine au moins.

14. Turbomachine selon la revendication 13, **caractérisée en ce qu'**une turbine au moins et un compresseur au moins sont disposés sur un arbre commun.

15. Utilisation de la turbomachine selon la revendication 1 dans une centrale de force motrice, une turbine au moins entraînant un générateur.

16. Procédé de fonctionnement d'une turbomachine, un gaz précontraint (7, 9) étant alimenté en une quantité de combustible (12, 13) au moins dans un générateur de chaleur (2, 4) au moins et du gaz chaud précontraint étant détendu dans une turbine (3, 5) au moins en générant une puissance mécanique, et dans laquelle turbomachine un flux partiel (26, 36, 46) au moins d'un gaz comprimé ou partiellement comprimé contourne un générateur de chaleur au moins en tant que premier agent de refroidissement destiné à refroidir des éléments de construction de la machine sollicités thermiquement par le gaz chaud dans un système de refroidissement au moins, la puissance étant réglée par l'intermédiaire de la quantité de combustible, laquelle quantité de combustible est limitée lorsque la température (T₁, T₃) atteint une valeur limite, **caractérisé en ce qu'**en vue d'augmenter la puissance de la turbomachine, un régulateur de puissance (51) est activé, lequel régulateur règle une quantité d'un autre agent (25, 35, 45) par l'intermédiaire d'organes de réglage (24, 34, 44) en fonction d'un écart de réglage (Pₛₑₜ - P_{act}), lequel autre agent est introduit dans un système de refroidissement et refoule le premier agent de refroidissement du système de refroidissement, lequel premier agent de refroidissement refoulé est disponible pour la combustion, et **en ce qu'**un régulateur de température (52) maintient la température (T₁, T₃) du gaz chaud à la valeur limite, de sorte que le régulateur de température (52) augmente la quantité de combustible (12, 13) et dès lors la puissance (P_{act}).

17. Procédé selon la revendication 16, **caractérisé en ce qu'**un régulateur de puissance (51) règle la quantité de l'autre agent de telle sorte qu'en présence de la puissance requise, le régulateur de température maintienne la température du gaz chaud exactement à la température limite.

18. Procédé selon la revendication 16, l'autre agent étant de la vapeur, **caractérisé en ce que** la vapeur à introduire dans le système de refroidissement est soutirée d'une chaudière chauffée par la chaleur perdue et **en ce que** l'endroit de soutirage de ladite chaudière est choisi de telle sorte que la pression de la vapeur corresponde à la pression de l'air comprimé dans le système de refroidissement.

19. Procédé selon la revendication 16, l'autre agent étant de la vapeur, **caractérisé en ce que** la vapeur à introduire dans le système de refroidissement est soutirée d'un endroit de soutirage d'une turbine à vapeur et **en ce que** l'endroit de soutirage est choisi de telle sorte que la pression de la vapeur corresponde à la pression de l'air comprimé dans le système de refroidissement.

20. Procédé selon la revendication 16, **caractérisé en ce que** les valeurs limites de température du gaz chaud sont augmentées lors de l'introduction d'un autre agent.

21. Procédé selon l'une quelconque des revendications 16 à 20, la turbomachine disposant de deux générateurs de chaleur au moins, lesquels sont montés en série par rapport au flux de gaz chaud, de sorte qu'un air comprimé afflue dans un premier générateur de chaleur et un gaz chaud précontraint généré dans le premier générateur de chaleur passe successivement à travers tous les générateurs de chaleur suivants disposés en aval, qu'une turbine, dans laquelle une détente partielle du gaz chaud se produit, soit disposée chaque fois entre deux générateurs de chaleur et qu'une dernière turbine, dans laquelle une détente du gaz chaud à une pression finale se produit, soit disposée en aval du dernier générateur de chaleur, et un premier générateur de chaleur et une première turbine ou partie de turbine étant équipés d'un premier conduit du système de refroidissement, et un nombre au moins d'autres générateurs de chaleur et de turbines ou parties de turbines disposés directement les uns derrière les autres étant équipés d'un autre conduit du système de refroidissement, lesquels conduits du système de refroidissement sont séparés les uns des autres, les différents conduits du système de refroidissement fonctionnant à des niveaux de pression différents, **caractérisé en ce que** l'alimentation en agent est choisie de telle sorte que la pression de l'agent soit adaptée à la pression dans chaque conduit du système de refroidissement.
